# EUROPÄISCHE PATENTSCHRIFT

(11) **EP 4 346 372 B1**
(45) Veröffentlichungstag und Bekanntmachung des Hinweises auf die Patenterteilung: **08.04.2026**
(21) Anmeldenummer: 22730529.9
(22) Anmeldetag: 27.05.2022
(51) Int. Cl.: A01D 75/18, A01D 34/00, A01D 34/64, A01D 34/86, A01D 34/84, A01B 13/06, A01B 39/26

(54) **SYSTEM ZUM ANTREIBEN UND AUSRICHTEN EINES LANDWIRTSCHAFTLICHEN GERÄTS MITTELS EINES HYDRAULIKKREISES**
SYSTEM FOR DRIVE AND ALIGNMENT OF AN AGRICULTURAL IMPLEMENT BY MEANS OF A HYDRAULIC CIRCUIT
SYSTEME D'ENTRAINEMENT ET D'ALIGNEMENT D'UN OUTIL AGRICOLE AU MOYEN D'UN CIRCUIT HYDRAULIQUE

(30) Priorität: 01.06.2021 IT 202100014336
(43) Veröffentlichungstag der Anmeldung: 10.04.2024
(73) Patentinhaber: Seppi M. SpA, 39052 Caldaro sulla Strada del Vino (IT)
(72) Erfinder: SEPPI, Lorenz, 39052 Caldaro sulla strada del vino (IT)
(74) Vertreter: Ausserer, Anton
(86) Internationale Anmeldenummer: PCT/EP2022/064393
(87) Internationale Veröffentlichungsnummer: WO 2022/253699

(56) Entgegenhaltungen:
- AU-B2- 507 369
- FR-A- 1 477 586
- IT-A1- BA20 130 057
- US-A- 4 936 390

## Beschreibung

Die vorliegende Erfindung betrifft ein System zum Antreiben und Ausrichten eines landwirtschaftlichen Geräts mittels eines Hydraulikkreises gemäß dem Oberbegriff von Anspruch 1.

### Anwendungsbereich

Das Einsatzgebiet sind Landmaschinen, insbesondere Landmaschinen mit landwirtschaftlichen Geräten zur Bodenbearbeitung und zum Grasmähen und ähnliche Anwendungen im Obst- und Weinbau und ähnlichen Anwendungen z.B. im Straßenbau. Das System verfügt über einen Fühler, der die Aufgabe hat, eine Pflanze zu erkennen und ein Arbeitsgerät so zu steuern, dass es der Pflanze ausweichen kann. Zum Beispiel Zwischenreihengeräte für Obst- und Weingärten wie Grasschneider, Eggen, Schälmesser, Bürsten usw. oder im Bereich der Straßeninstandhaltung zum Beispiel Rasenmäher, die um Schilder oder Leitplanken herum reinigen.

### Stand der Technik

Seit der DE 102005035634 ist ein Verfahren bekannt, wie ein Werkzeug, insbesondere einen Rasenmäher, für die Straßenpflege zu betreiben. Das beschriebene Verfahren mäht das Gras um ein Hindernis herum selbständig, indem es dieses erkennt, ohne dass der Fahrzeugführer eingreifen muss. Das beschriebene Gerät verfügt über eine in Fahrtrichtung des Benutzers angeordnete Sonde, die bei einem Aufprall auf ein Hindernis Signale sendet. Darüber hinaus gibt es Sensoren, die die aktuelle Position des Werkzeugs erfassen. All diese Daten werden in den Zentralrechner eingespeist, der die Ausweichbewegung in Abhängigkeit von der Geschwindigkeit des Fahrzeugs berechnet und den hydraulischen Mechanismus zur Durchführung des Ausweichmanövers steuert. Dieser Prozess erfordert eine Vielzahl von Sensoren und Elektronik, die natürlich zusätzliche Kosten verursachen und auch anfällig für Schäden sind, was zu Ausfallzeiten führt.

DD52568 beschreibt auch ein Tastsystem zur Steuerung von Traktoren oder landwirtschaftlichen Geräten, die über mechanische, elektrische, hydraulische oder pneumatische Steuerelemente verfügen. Dieses Tastsystem steuert die Bewegung mit Hilfe eines Kreuzgelenks und einer Kette.

US 6 591 592 und WO 03 059040 beschreiben ebenfalls Geräte mit Tasterelementen zur Steuerung landwirtschaftlicher Geräte.

WO 03/084307 beschreibt ein automatisches Nachführgerät mit einem Rotor, der von einem Arm getragen wird, der an einem Rahmen einer Zugvorrichtung angelenkt ist, mit einem fluiddynamischen Zylinder, der zwischen dem Rahmen und dem Rotor wirkt und von einem Verteiler gesteuert wird, der seinerseits von Hand oder von einem r Sonde (Taster) gesteuert wird, um das Vorhandensein eines Hindernisses zu erkennen, und dass der Zylinder am Rahmen unter Zwischenschaltung eines stoßdämpfenden, am Rahmen angelenkten Kipphebels angelenkt ist, wobei einer der Arme, an dem der Zylinder angelenkt ist, und der andere Arm mit einem Ende eine Feder gelenkig verbunden sind und das andere Ende am Rahmen befestigt ist, so dass der Kipphebel im Gegensatz zur Wirkung des Zylinders auf den Kipphebel auf den Rahmen gedrückt werden kann, wodurch das Gerät an seinen Ausgangspunkt zurückgebracht wird.

Die US 4936390 beschreibt eine Dreipunktaufhängung. welche einen Mähkopf trägt. Das beschriebene System weist einen Anschlag auf, welcher die Arbeitsgeschwindigkeit der Maschine verlangsamt. Außerdem sind die verschieden Elemente mit dem Rahmen in mehreren Punkten verbunden, was zu Schwingungen und Vibrationen im System führen kann.

Weitere Systeme sind z.B. aus den folgenden Dokumenten bekannt: ITBA20130057A, FR1477586A und AU507369B2.

Bei allen bekannten hydraulisch betriebenen Systemen besteht das Problem darin, dass die automatische Steuerung die manuelle Steuerung stört, insbesondere wenn sowohl der Bediener als auch das System denselben Befehl geben. Dies kann zu einem gegenteiligen Befehl führen. Außerdem darf die Reaktion auf ein vom Sondenkopf erkanntes Hindernis nicht linear sein: Das bedeutet, dass es bei Hindernissen eines bestimmten Typs widerstandsfähig sein muss, d.h. es muss die Bewegung des Werkzeugs verhindern, da es sonst einen Bereich gibt, in dem das Gras nicht geschnitten wird, und andererseits muss vermieden werden, dass das Werkzeug z.B. junge Bäume schneidet.

### Kurzbeschreibung der Erfindung

Aufgabe der vorliegenden Erfindung ist es, ein System zum Antreiben und Ausrichten eines landwirtschaftlichen Gerätes mittels eines Hydraulikkreises zu realisieren.

Diese Aufgabe wird durch ein System nach Anspruch 1 gelöst.

Das System zur Steuerung eines landwirtschaftlichen Geräts umfassend einen Sonde zur Erkennung von Hindernissen. Diese Sonde ist mit einer Nocke verbunden, der schwenkbar an einem Arm angelenkt ist, der das landwirtschaftliche Gerät trägt, wobei der Arm schwenkbar an einem Rahmen eines Zugmittels angelenkt ist und einen fluiddynamischen Zylinder umfasst, der zwischen dem Rahmen und dem Arm wirkt, und wobei dieser Zylinder durch einen Hydraulikkreislauf gesteuert wird, wobei der Hydraulikkreislauf entweder manuell durch einen Bediener oder durch die Sonde mittels der Nocke gesteuert wird. Erfindungsgemäß hat der Nocke einen nicht kreisförmigen Querschnitt, und vorzugsweise eine Aussparung und/oder einen Vorsprung aufweist, der auf ein Aktivierungselement des Hydraulikkreises drückt. Der Nocke hat einen teilweise kreisförmigen Querschnitt mit einem nicht kreisförmigen Abschnitt, dabei drückt der Nocke auf ein Aktivierungselement des Hydraulikkreises und die Sonde und der Arm drehen sich um dieselbe Achse. Durch den nicht verstellbaren Abschnitt ist der Nockendruck auf das Aktivierungselement, vorteilhafterweise ein Kolben, nicht linear. Auf diese Weise kann die Bewegungsgeschwindigkeit des Arms, der das landwirtschaftliche Gerät trägt, angepasst werden. Das Aktivierungselement wird von einem elastischen Element, vorzugsweise einer Feder, getragen. Dieses federt gegen den Druck der Nocke. Wenn die Nocke nicht mehr gegen das Aktivierungselement drückt, bringt die Feder das Aktivierungselement wieder in die Ausgangsstellung zurück. Die Ausgangsposition kann in einer Ausführungsform leichter erreicht werden, indem ein Wälzkörper der zwischen der Nocke und dem Hydraulikkreislauf angeordnet ist wieder in die Aussparung gebracht wird.

So kann es beispielsweise erforderlich sein, dass sich der Arm in einem ersten Phase der Drehung des Tastsystems nicht oder nur geringfügig bewegt und in einer zweiten Phase dann schnell.

Dies kann aufgrund von unterschiedlichen Anwendungen und Anforderungen erforderlich sein.

Vorteilhafterweise weist der erfindungsgemäße Hydraulikkreis mindestens ein Verteilerventil für das Tastsystem, ein Verteilerventil für die Steuerung durch den Bediener (Bedienerverteilerventil) und vier Einwegventile auf, die mit dem Verteilerventil des Tastsystems einen Kreislauf bilden, so dass bei Betätigung des Verteilerventils des Bedieners (Bedienerverteilerventil) das Verteilerventil des Tastsystems den Hydraulikzylinder nicht mehr steuern kann.

### Figurenbeschreibung

Weitere Zwecke, Merkmale, Vorteile und Anwendungsmöglichkeiten ergeben sich aus der nachfolgenden Beschreibung einiger Ausführungsbeispiele und den zugehörigen Zeichnungen. Alle in den Figuren beschriebenen und/oder dargestellten Merkmale bilden den hier offenbarten Gegenstand, auch unabhängig von ihrer Gruppierung in den Ansprüchen oder ihren Abhängigkeiten. In der Zeichnung:

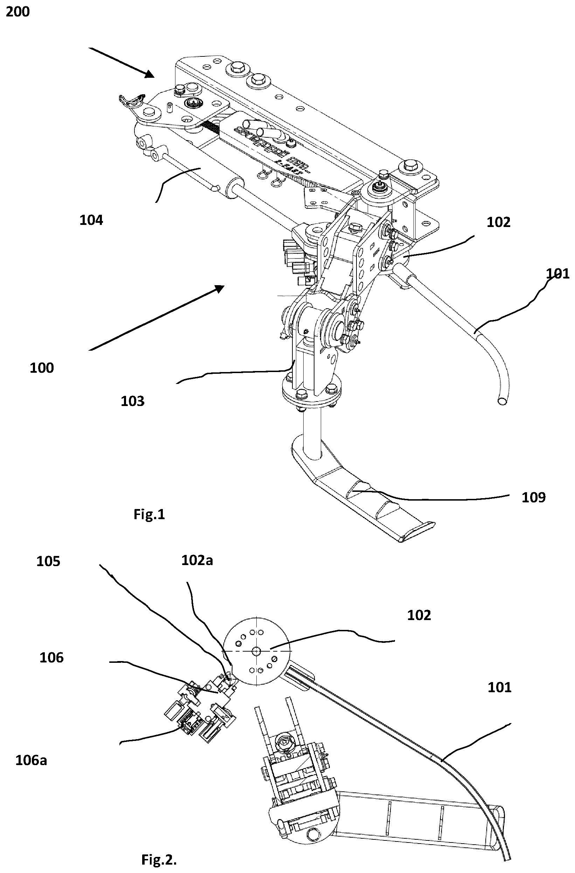

Figur 1 zeigt eine perspektivische Ansicht eines erfindungsgemäßen Systems,
Figur 2 zeigt einen horizontalen Schnitt durch das erfindungsgemäße System in einer ersten Position,

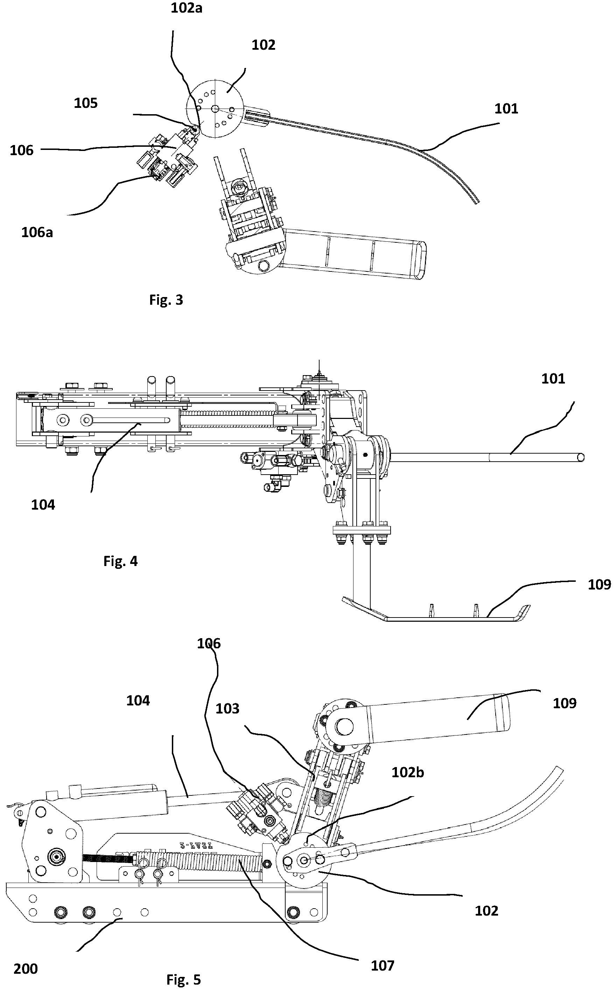

Figur 3 zeigt den Ausschnitt aus Figur 2 in einer zweiten Position,
Figur 4 zeigt eine Rückansicht eines erfindungsgemäßen Systems,
Figur 5 zeigt eine Unteransicht des erfindungsgemäßen Systems, und

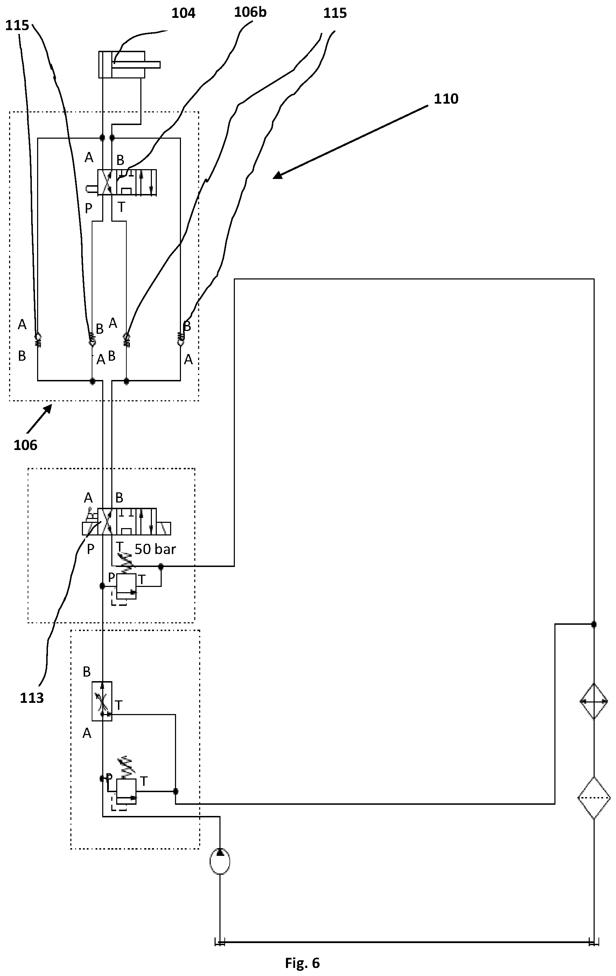

Figur 6 zeigt einen Hydraulikkreislauf zur Steuerung des fluiddynamischen Zylinders.

### Ausführliche Beschreibung

Die Bezugsziffer 100 bezeichnet ein System zur Steuerung eines landwirtschaftlichen Geräts 109 mit einem Hydraulikkreislauf. Das landwirtschaftliche Gerät 109 ist nicht auf das abgebildete Gerät beschränkt, sondern kann ein beliebiges, auch automatisiertes Gerät zur Bodenbearbeitung und/oder zum Grasschneiden sein. Das erfindungsgemäße System 100 umfasst eine Sonde 101 zur Erfassung von Hindernissen. Das Tastsystem 101 kann ein einfacher Metallstab sein.

Diese Sonde 101 ist drehbar mit einer Nocke 102 verbunden, die schwenkbar an einem Rahmen 108 angelenkt ist, der mit einem Zugmittel, z. B. einem Traktor, verbunden werden kann, der einen Arm 103 schwenkt, an dem das landwirtschaftliche Gerät 109 befestigt ist. Die Drehachse der Sonde 101 und die Drehachse des Arms 103, der das landwirtschaftliche Gerät 109 trägt, sind vorteilhafterweise deckungsgleich.

Zwischen dem Rahmen 108 und dem Arm 103 befindet sich ein fluiddynamischer Zylinder 104.

Der Zylinder 104 wird von einem Hydraulikkreis 110 gesteuert.

Der Hydraulikkreis 110 wird entweder manuell von einem Bediener und/oder von der Sonde 101 über die Nocke gesteuert.

Die Nocke 102 hat einen teilweise kreisförmigen Querschnitt mit einem nicht kreisförmigen Abschnitt eine Nockenaussparung 102a. Die Nocke 102 weist ein Aktivierungselement des Hydraulikkreises 110 auf und die Sonde 101 und der Arm 103 drehen sich um dieselbe Achse.

Dadurch wird eine höhere Arbeitsgeschwindigkeit erreicht ohne dass das gesamte System in Schwingung versetz wird oder in Resonanz geht.

Durch den teilweise kreisförmigen Querschnitt der Nocke 102 und einen nicht kreisförmigen Abschnitt eine Nockenaussparung 102a benötigt die Nocke und somit die Sonde keinen Anschlag.

Erfindungsgemäß weist die Nocke 102 einen unrunden Querschnitt auf, der in bevorzugter Weise eine Ausnehmung und/oder eine Entlastung 102a aufweist, die auf ein Aktivierungselement des Hydraulikkreises drückt.

Vorteilhafterweise ist ein Wälzkörper 105 zwischen einem Aktivierungselement /Kolben 106 des Hydraulikkreislaufs und der Nocke 102 angeordnet. Aufgrund des unregelmäßigen (nicht kreisförmigen) Querschnitts ist der Druck der Nocke 102 auf das Aktivierungselement 106, vorteilhaft ein Wegeventil, nicht linear. Auf diese Weise kann die Bewegungsgeschwindigkeit des Arms, der das landwirtschaftliche Gerät trägt, angepasst werden. So kann es beispielsweise erforderlich sein, dass sich der Arm in einer ersten Phase der Drehung des Tastsystems nicht oder nur geringfügig bewegt und sich dann in einer zweiten Phase schnell bewegt.

Das Aktivierungselement 106 ist durch ein elastisches Element 106a elastisch gelagert. Dieses Federelement 106a wirkt dem Druck der Nocke 102 über den Wälzkörper 105 entgegen. Wenn der Messsonde nicht mehr durch ein Hindernis belastet wird, bringt das Federelement 106a das Aktivierungselement in eine vordere Position, wodurch die Messsonde 101 und die Nocke 102 in die ausgefahrene Arbeitsposition zurückkehren.

Die Einstellung kann über Löcher 102b in der Nocke 102 erfolgen, um zu regulieren, in welcher Position der Nocke 102 der Wälzkörper beispielsweise in die Ausnehmung 102b ein- oder austritt und einen nichtlinearen Druck erzeugt.

Dies kann aufgrund unterschiedlicher Verwendungszwecke und Anforderungen erforderlich sein.

Eine Rückholfeder/ein Rückholelement 107 kann vorgesehen werden, um das System aus der eingefahrenen/nicht ausgefahrenen Stellung des Arms 103 in die Betriebsstellung/ausgefahrenen Stellung zurückzubringen, obwohl das landwirtschaftliche Gerät auch funktionieren kann, wenn der Arm 103 in der eingefahrenen Stellung nicht oder nur teilweise ausgefahren ist.

Vorteilhafterweise weist der erfindungsgemäße Hydraulikkreis 110 mindestens ein Verteilerventil für das Tastsystem 106b und ein Verteilerventil zur Steuerung durch den Bediener 113 (Bedienerverteilerventil) auf. Vorteilhafterweise bilden mindestens vier Einwegventile 115 einen Sekundärkreislauf, der mit dem Verteilerventil des Tastsystems 112 verbunden ist.

Auf diese Weise wird, wenn der Bediener den Befehl zum Zurückziehen des Arms 103 mittels des fluiddynamischen Zylinders 104 gibt, obwohl er von der Messsonde 101 mittels des Aktivierungselements 106 kommt, derselbe Befehl, der in bekannten Schaltungen zu einer Annullierung des Bedienerbefehls führte und daher der Arm 103 sich nicht mittels des Sekundärkreislaufs 111 bewegte, kein Fluid zum fluiddynamischen Kolben 104 geschickt und daher wird der Bedienerbefehl ausgeführt.

Auf diese Weise wird die Schaltung 111 so ausgebildet, dass bei Betätigung des Verteilerventils 113 des Bedieners (Bedienerverteilerventil) das Verteilerventil des Tastsystems 106b den Hydraulikzylinder 104 nicht mehr ansteuern kann.

Die zuvor beschriebenen Varianten des Mechanismus dienen nur dem besseren Verständnis des Aufbaus, der Funktionsweise und der Eigenschaften der vorgestellten Lösung; sie schränken die Offenbarung durch die Ausführungsbeispiele nicht ein. Die Figuren sind schematisch, wobei wesentliche Eigenschaften und Wirkungen teilweise deutlich vergrößert dargestellt werden, um Funktionen, Wirkprinzipien, Konfigurationen und technische Merkmale hervorzuheben. Dementsprechend kann jede Funktion, jedes Prinzip, jede technische Konfiguration und jedes Merkmal, die in den Figuren oder im Text offenbart sind, frei und in beliebiger Weise mit allen Ansprüchen, jedem Merkmal im Text und in den anderen Figuren, anderen Funktionen, Prinzipien, Konfigurationen und technischen Merkmalen, die in dieser Offenbarung enthalten sind oder sich daraus ergeben, kombiniert werden, so dass alle denkbaren Kombinationen der beschriebenen Lösung zuzuordnen sind. Dazu gehören auch Kombinationen zwischen allen einzelnen Darstellungen im Text, d. h. auf jeder Seite des Textes, in den Ansprüchen und auch Kombinationen zwischen verschiedenen Varianten im Text, in den Abmessungen und in den Figuren. Die zuvor dargestellten Details von Gerät und Verfahren sind in der Verlinkung dargestellt; es ist jedoch zu beachten, dass sie auch unabhängig voneinander und auch frei miteinander kombiniert werden können. Die in den Figuren dargestellten Verhältnisse der einzelnen Teile und Abschnitte zueinander sowie deren Abmessungen und Proportionen sind nicht als einschränkend zu verstehen. Einzelne Maße und Proportionen können jedoch von den dargestellten abweichen. Auch die Ansprüche schränken die Offenbarung und damit die Kombinationsmöglichkeiten aller vorgestellten Merkmale nicht ein. Alle vorgestellten Merkmale werden hier auch einzeln und in Kombination mit allen anderen Merkmalen offengelegt.

### Liste der Bezugsziffern

100 System zur Steuerung eines landwirtschaftlichen Geräts
101 Sonde
102 Nocke
102a Nockenaussparung
102b Einstelllöcher
103 Arm
104 fluiddynamischer Kolben
105 Wälzkörper
106 Aktivierungselement/Kolben des Hydraulikkreises
106a Federelement
106b Verteilerventil des Aktivierungselements
107 Rücklaufelement/Feder
108 Rahmen
110 Hydraulikkreislauf
113 Betreiber Verteilerventil / Bedienerverteilerventil
115 Einwegventile
200 Antriebsmaschine

## Patentansprüche

1. Landwirtschaftliches Gerät und ein System zur Steuerung dieses landwirtschaftlichen Geräts (100) für ein Zugfahrzeug (200), umfassend eine Sonde (101) zur Erfassung von Hindernissen, wobei die Sonde (101) mit einer Nocke (102) verbunden ist, die schwenkbar an einem Arm (103) angelenkt ist, der das landwirtschaftliche Gerät trägt, und wobei der Arm (103) schwenkbar an einem Rahmen eines Zugfahrzeuges (200) anlenkbar ist und einen fluiddynamischen Zylinder (104) aufweist, der zwischen dem Rahmen (200) und dem Arm (103) wirkt, und wobei dieser Zylinder (104) von einem Hydraulikkreis (110) gesteuert wird, entweder manuell durch einen Bediener oder durch die Sonde mittels der Nocke, wobei die Nocke (102) einen teilweise kreisförmigen Querschnitt mit einem nicht kreisförmigen Abschnitt und eine Nockenaussparung (102a) aufweist, wobei die Nocke (102) auf ein Aktivierungselement (106) des Hydraulikkreises (110) drückt und die Sonde (101) und der Arm (103) sich um dieselbe Achse drehen,
**dadurch gekennzeichnet, dass**
der Hydraulikkreis (110) mindestens ein Verteilerventil des Aktivierungselements (106b), ein Bedienerverteilerventil für die Steuerung durch den Bediener (113) und vier Einwegventile (115) aufweist, wobei die vier Einwegventile (115) zusammen mit dem Verteilerventil des Aktivierungselements (106b) einen Sekundärkreislauf bilden, so dass bei Betätigung des Bedienerverteilerventils (113) das Verteilerventil des Aktivierungselements (106b) den Hydraulikzylinder (104) nicht mehr steuern kann.

2. Landwirtschaftliches Gerät und ein System zur Steuerung dieses landwirtschaftlichen Geräts (100) nach Anspruch 1, **dadurch gekennzeichnet, dass** das Aktivierungselement (106) mit dem Arm (103) fest verbunden ist.

3. Landwirtschaftliches Gerät und ein System zur Steuerung dieses landwirtschaftlichen Geräts (100) nach Anspruch 1 oder 2, **dadurch gekennzeichnet, dass** die Nocke (102) einen Vorsprung aufweist.

4. Landwirtschaftliches Gerät und ein System zur Steuerung dieses landwirtschaftlichen Geräts (100) nach einem der vorhergehenden Ansprüche, **dadurch gekennzeichnet, dass** das Aktivierungselement (106) durch ein elastisches Element (106a) gegenüber dem Arm (103) elastisch abgestützt ist.

5. Landwirtschaftliches Gerät und ein System zur Steuerung dieses landwirtschaftlichen Geräts (100) nach Anspruch 4, **dadurch gekennzeichnet, dass** das elastische Element den von der Sonde (101) erzeugten Nockendruckkräften (102) entgegengesetzt ist.

6. Landwirtschaftliches Gerät und ein System zur Steuerung dieses landwirtschaftlichen Geräts (100) nach einem der vorhergehenden Ansprüche, **dadurch gekennzeichnet, dass** zwischen der Nocke und dem Aktivierungselement (106) des Hydraulikkreises (110) ein Wälzkörper (105) angeordnet ist.

7. Landwirtschaftliches Gerät und ein System zur Steuerung dieses landwirtschaftlichen Geräts (100) nach einem der vorhergehenden Ansprüche, **dadurch gekennzeichnet, dass** die Nocke (102) Löcher (102b) zur Einstellung der Bewegung des Armes (103) aufweist.

8. Landwirtschaftliches Gerät und ein System zur Steuerung dieses landwirtschaftlichen Geräts (100) nach einem der vorhergehenden Ansprüche, **dadurch gekennzeichnet, dass** zwischen dem Rahmen (108) und dem Arm (103) ein Rückstellelement, insbesondere eine Feder (107) zum Zurückführen des Armes in die ausgefahrene Position, zwischengeschaltet ist.

## Claims

1. Agricultural implement and a system for controlling this agricultural implement (100) for a towing vehicle (200), comprising a probe (101) for detecting obstacles, **characterised in that** the probe (101) is connected to a cam (102) that is pivotably articulated to an arm (103) that carries the agricultural implement, and wherein the arm (103) is pivotably articulated to a frame of a tractor (200) and has a fluid dynamic cylinder (104) that acts between the frame (200) and the arm (103), and wherein this cylinder (104) is controlled by a hydraulic circuit (110), either manually by an operator or by the probe by means of the cam, wherein the hydraulic circuit (110) being controlled either manually by an operator or by the probe by means of the cam, wherein the cam (102) has a partially circular cross-section with a non-circular section and a cam recess (102a), wherein the cam (102) presses on an activation element (106) of the hydraulic circuit (110), and the probe (101) and the arm (103) rotate about the same axis, the hydraulic circuit comprising at least four one-way valves (115) forming a secondary circuit connected to a distributor valve of the probe (106b), and wherein the hydraulic circuit (110) comprises at least one distribution valve for the probe system (106b) and one distribution valve for control by the operator (113), and at least four one-way valves (115) form a secondary circuit connected to the distribution valve of the probe system (112).

2. Agricultural implement and a system for controlling this agricultural implement (100) according to claim 1, **characterised in that** the activation element (106) is firmly connected to the arm (103).

3. Agricultural implement and a system for controlling this agricultural implement (100) according to claim 1 or 2, **characterised in that** the cam (102) has a projection.

4. Agricultural implement and a system for controlling this agricultural implement (100) according to one of the preceding claims, **characterised in that** the activation element (106) is elastically supported relative to the arm (103) by an elastic element (106a).

5. Agricultural implement and a system for controlling this agricultural implement (100) according to claim 4, **characterised in that** the elastic element opposes the comb pressure forces (102) generated by the probe (101).

6. Agricultural implement and a system for controlling this agricultural implement (100) according to one of the preceding claims, **characterised in that** a rolling element (105) is arranged between the cam and the activation element (106) of the hydraulic circuit (110).

7. Agricultural implement and a system for controlling this agricultural implement (100) according to one of the preceding claims, **characterised in that** the cam (102) has holes (102b) for adjusting the movement of the arm (103).

8. Agricultural implement and a system for controlling this agricultural implement (100) according to one of the preceding claims, **characterised in that** a return element, in particular a spring (107) for returning the arm to the extended position, is interposed between the frame (108) and the arm (103).

## Revendications

1. Outil agricole et système de commande de cet outil agricole (100) pour un véhicule tracteur (200), comprenant une sonde (101) pour détecter des obstacles, **caractérisé en ce que** la sonde (101) est reliée à une came (102) articulée de manière pivotante sur un bras (103) qui porte l'outil agricole, et dans lequel le bras (103) est articulé de manière pivotante sur un châssis d'un véhicule tracteur (200) et comporte un vérin fluidodynamique (104) qui agit entre le châssis (200) et le bras (103), et ce vérin (104) étant commandé par un circuit hydraulique (110), soit manuellement par un opérateur, soit par la sonde au moyen de la came, le circuit hydraulique (110) étant commandé soit manuellement par un opérateur, soit par la sonde au moyen de la came, la came (102) présentant une section transversale partiellement circulaire avec une partie non circulaire et un évidement de came (102a), la came (102) appuyant sur un élément d'activation (106) du circuit hydraulique (110), et la sonde (101) et le bras (103) tournent autour du même axe, le circuit hydraulique comprenant au moins quatre valves unidirectionnelles (115) formant un circuit secondaire relié à une valve de distribution du palpeur (106b), et le circuit hydraulique (110) comportant au moins une vanne de distribution pour le système de palpage (106b) et une vanne de distribution pour la commande par l'opérateur (113), et au moins quatre valves unidirectionnelles (115) formant un circuit secondaire relié à la vanne de distribution du système de palpage (112).

2. Outil agricole et système de commande de cet outil agricole (100) selon la revendication 1, **caractérisé en ce que** l'élément d'activation (106) est relié de manière fixe au bras (103).

3. Outil agricole et système de commande de cet outil agricole (100) selon la revendication 1 ou 2, **caractérisé en ce que** la came (102) comporte une saillie.

4. Outil agricole et système de commande de cet outil agricole (100) selon l'une des revendications précédentes, **caractérisé en ce que** l'élément d'activation (106) est supporté de manière élastique par rapport au bras (103) par un élément élastique (106a).

5. Outil agricole et système de commande de cet outil agricole (100) selon la revendication 4, **caractérisé en ce que** l'élément élastique s'oppose aux forces de pression de peigne (102) générées par la sonde (101).

6. Outil agricole et système de commande de cet outil agricole (100) selon l'une des revendications précédentes, **caractérisé en ce qu'**un élément roulant (105) est disposé entre la came et l'élément d'activation (106) du circuit hydraulique (110).

7. Outil agricole et système de commande de cet outil agricole (100) selon l'une des revendications précédentes, **caractérisé en ce que** la came (102) comporte des trous (102b) pour régler le mouvement du bras (103).

8. Outil agricole et système de commande de cet outil agricole (100) selon l'une des revendications précédentes, **caractérisé en ce qu'**un élément de rappel, en particulier un ressort (107) destiné à ramener le bras dans la position déployée, est intercalé entre le châssis (108) et le bras (103).
